(19) **Europäisches Patentamt**
**European Patent Office**
**Office européen des brevets**

(11) **EP 4 621 810 A1**

(12) **EUROPEAN PATENT APPLICATION**

(43) Date of publication:
**24.09.2025 Bulletin 2025/39**

(21) Application number: **24181582.8**

(22) Date of filing: **12.06.2024**

(51) International Patent Classification (IPC):
*H01F 3/10* (2006.01)   *H01F 19/08* (2006.01)
*H01F 27/28* (2006.01)   *H01F 27/40* (2006.01)
*B60L 53/30* (2019.01)   *H01F 30/16* (2006.01)
*H01F 37/00* (2006.01)   *H01F 27/255* (2006.01)

(52) Cooperative Patent Classification (CPC):
**H01F 3/10; B60L 53/30; H01F 27/2895;**
**H01F 27/40; H01F 30/16; H01F 37/00;** H01F 27/255

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.03.2024 US 202418613846**

(71) Applicant: **Semiconductor Components**
**Industries, LLC**
**Scottsdale, AZ 85250 (US)**

(72) Inventor: **GOLDMANN, Daniel Leon**
**81247 München (DE)**

(74) Representative: **Manitz Finsterwald**
**Patent- und Rechtsanwaltspartnerschaft mbB**
**Martin-Greif-Straße 1**
**80336 München (DE)**

(54) **HIGH-POWER TELESCOPE TRANSFORMER**

(57)   A high-power telescoped transformer can be used to provide efficient power conversion in an electric vehicle (EV) fast charger. The telescoped transformer includes a pair of concentric toroidal magnetic cores, with a primary set of windings that wraps around both cores and a secondary set of windings that wraps around one of the cores. By using a shorter total length of wire for the windings, resistive power losses are reduced, compared with conventional transformer and inductance combinations. This also results in a reduced volume of the EV fast charger. Multiple transformer modules can be coupled in series to form a high power EV charger.

FIG. 4

EP 4 621 810 A1

## Description

### CROSS-REFERENCE TO RELATED APPLICATION

This patent application claims the benefit of U.S. Patent Application No. 18/613,846, filed on March 22, 2024, and titled "High Power Telescope Transformer," which is incorporated by reference herein in its entirety.

### TECHNICAL FIELD

The present disclosure relates to a power converter that includes a high frequency telescoped transformer suitable for use in electric vehicle (EV) charging stations.

### BACKGROUND

Various types of electric vehicle charging stations have different voltage ratings and different charging speeds. Level 1 chargers plug into a standard 120 V AC (alternating current) outlet, and can charge an EV battery overnight. Level 2 chargers plug into a 240 V AC outlet, and can charge an EV battery in a few hours. Level 3 "fast" DC chargers are used for public charging stations and can charge an EV battery in less than one hour.

### SUMMARY

In some aspects, the techniques described herein relate to an apparatus, including: a base toroidal outer core having an opening and a longitudinal axis through the opening; a base toroidal inner core disposed within the opening and coaxial with the base toroidal outer core; a first set of conductive windings wrapped around the base toroidal outer core and the base toroidal inner core to pass through the opening; and a second set of conductive windings wrapped around the base toroidal outer core so as to pass through the opening.

In some aspects, the techniques described herein relate to an apparatus, further including one or more additional toroidal outer cores stacked on the base toroidal outer core to form an outer circular cylinder having an opening, wherein the first and second sets of conductive windings wrap around the outer circular cylinder and pass through the opening.

In some aspects, the techniques described herein relate to an apparatus, further including an additional toroidal inner core stacked on the base toroidal inner core to form an inner circular cylinder having an opening, wherein the first set of conductive windings wrap around the inner circular cylinder and pass through the opening.

In some aspects, the techniques described herein relate to an apparatus, wherein the outer circular cylinder is a transformer core, and the inner circular cylinder is an inductance core.

In some aspects, the techniques described herein relate to an apparatus, wherein the second set of conductive windings are shorter than the first set of conductive windings by a length equal to about twice a radial thickness of the base toroidal inner core.

In some aspects, the techniques described herein relate to an apparatus, wherein the base toroidal outer core and the base toroidal inner core include ferrite materials.

In some aspects, the techniques described herein relate to an apparatus, wherein the ferrite materials include a zinc alloy.

In some aspects, the techniques described herein relate to a method, including: energizing a primary winding of a telescoped transformer to induce a magnetic field in an outer transformer core and an inner inductor core; inducing current in a secondary winding of a telescoped transformer via the magnetic field in the outer transformer core; and operating the telescoped transformer to supply power to an electric vehicle charger via the secondary winding.

In some aspects, the techniques described herein relate to a method, wherein operating the telescoped transformer includes energizing long primary windings that wrap around both the outer transformer core and the inner inductor core.

In some aspects, the techniques described herein relate to a method, wherein operating the telescoped transformer includes energizing short primary windings that wrap around the outer transformer core.

In some aspects, the techniques described herein relate to a method, wherein, while operating the telescoped transformer, a power-to-volume ratio exceeds 10 kW/liter.

In some aspects, the techniques described herein relate to an electric vehicle charging station, including: a power module including a printed circuit board a telescoped transformer coupled to the printed circuit board, the telescoped transformer having an inner core inside an outer core; a microcontroller mounted to the printed circuit board and coupled to the telescoped transformer, the microcontroller configured to control operation of the telescoped transformer; and a cable configured to couple the power module to an electric vehicle.

In some aspects, the techniques described herein relate to an EV charging station, further including additional telescoped transformers coupled in parallel to increase a charging capacity of the electric vehicle charging station..

In some aspects, the techniques described herein relate to an electric vehicle charging station, further including additional power modules coupled in parallel to increase a charging capacity of the electric vehicle charging station.

In some aspects, the techniques described herein relate to an electric vehicle charging station, wherein the power module delivers a power of about 25 kW.

In some aspects, the techniques described herein relate to an electric vehicle charging station, wherein the telescoped transformer includes a stack of multiple toroidal outer magnetic cores.

In some aspects, the techniques described herein relate to an electric vehicle charging station, wherein the telescoped transformer has a substantially circular footprint on the printed circuit board.

In some aspects, the techniques described herein relate to an electric vehicle charging station, wherein the electric vehicle charging station supplies a total power of about 300 kW.

In some aspects, the techniques described herein relate to an electric vehicle charging station, wherein the power module includes silicon carbide (SiC). In some aspects, the techniques described herein relate to an electric vehicle charging station, configured to operate at 240 V.

## BRIEF DESCRIPTION OF THE DRAWINGS

FIG. 1 is a pictorial view of an electrical vehicle (EV) fast charging station that includes high-power telescope transformers, according to implementations of the present disclosure.

FIG. 2A is pictorial perspective view of a transformer module, according to implementations of the present disclosure.

FIG. 2B is a block diagram of a modular EV fast charger, according to implementations of the present disclosure.

FIG. 3 is a top down plan view of an AC-DC converter circuit board to which high-power telescope transformers are coupled, and a DC-DC converter circuit board, according to implementations of the present disclosure.

FIG. 4 is a pictorial perspective view of a high-power telescope transformer, according to implementations of the present disclosure.

FIG. 5 is a flow diagram illustrating a method of operating a high-power telescope transformer, according to an implementation of the present disclosure.

FIG. 6 is a schematic diagram of a high-power telescope transformer, according to implementations of the present disclosure.

FIG. 7 is a cross-sectional view of a high-power telescope transformer during a short circuit simulation, according to implementations of the present disclosure.

FIG. 8 is a cross-sectional view of a high-power telescope transformer during an open circuit simulation, according to implementations of the present disclosure.

Aspects of the present disclosure are best understood from the following detailed description when read with the accompanying figures. It is noted that, in accordance with common practice in the industry, various features are not necessarily drawn to scale. Dimensions of the various features may be arbitrarily increased or reduced for clarity of discussion. In the drawings, like reference symbols may indicate like and/or similar components (elements, structures, etc.) in different views. The drawings illustrate generally, by way of example, but not by way of limitation, various implementations discussed in the present disclosure. Reference symbols shown in one drawing may not be repeated for the same, and/or similar elements in related views. Reference symbols that are repeated in multiple drawings may not be specifically discussed with respect to each of those drawings but are provided for context between related views. Also, not all like elements in the drawings are specifically referenced with a reference symbol when multiple instances of an element are illustrated.

## DETAILED DESCRIPTION

Most EV batteries in use today are rated at 400 V DC (direct current). When using an AC (alternating current) source, an AC-DC converter can be provided in the charger, or an internal AC-DC converter in the EV can be used. DC-DC power converters can be provided within a fast charger, for example, to convert a high voltage supplied by the charging station (e.g., 480 V DC) to a lower voltage (e.g., 400 V) that matches the rating of the EV battery being charged. DC-DC power converters are also used in many industrial applications, for example, power supplies for Internet servers and solid state transformers.

An isolated DC-DC power converter can include an on-board high frequency transformer with an additional integrated inductance. High frequency transformers can operate in a range of about 100 kHz to about 300 kHz. A transformer is formed by winding primary and secondary conductors around a common magnetic core to form a coil. When a time-varying signal is applied to either the primary or the secondary conductor, a current is induced in the other conductor by magnetic coupling. To increase efficiency of the power converter, it is advantageous to increase the inductance of the transformer while decreasing the resistance loss in the coil. The inductance of a cylindrical coil is given by $L = \mu N^2 A/l$, where $\mu$ is the magnetic permeability of the magnetic core, N is the number of turns of the coil, A is the area of the coil, equal to $\pi r^2$, and l is the length of the coil. Accordingly, the inductance L of a transformer can be increased either by increasing the number of windings, or by increasing the radius of the core to enhance the strength of the magnetic field. The resistance in the windings of the transformer coil is given by $R = \rho\, l/A$, where $\rho$ is the resistivity of the winding material, l is the length of the windings, and A is the cross-sectional area of the wire used for the windings. The resistance in the windings therefore can be reduced by reducing the length of wire used in the windings, and by using a low resistivity material for the windings, e.g., copper.

When losses in the transformer are predominantly driven by core losses, e.g., for low to medium power magnetics less than about 10 kW, the transformer can be made more efficient by increasing the equivalent magnetic area of the core and/or increasing the number of windings. When losses in the transformer are predominantly driven by winding losses, e.g., for high power magnetics used in EV chargers, the transformer can be made more efficient by increasing the size (e.g., radius) of the core and reducing the number of windings, e.g., the number of turns N, which reduces the winding length l. One way to effectively increase the magnetic equivalent area of the core is to use the same winding to excite two magnetic cores. One geometry that supports such a design is a toroidal transformer in which two or more magnetic cores can be stacked on top of one another to increase the cross section and therefore the effective magnetic area.

DC-DC converter topologies, such as dual active bridge or resonant LLC converters, include two magnetic components: a transformer to provide galvanic isolation and voltage conversion, and an additional inductance to limit power flow between both sides of the transformer. Each of these magnetic components have individual windings. By telescoping two toroidal cores, some or all of the windings of one toroidal core can also be wound around the other toroidal core. This results in less overall winding length compared to using two discrete magnetic components.

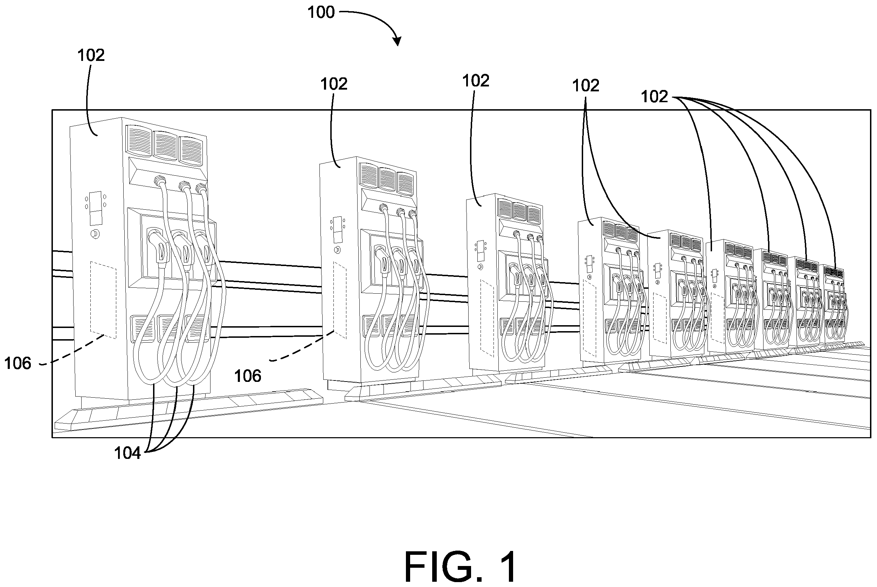

FIG. 1 is a pictorial perspective view of an EV charging station 100, according to some implementations of the present disclosure. The EV charging station 100 includes one or more EV fast chargers 102 (nine shown in this example). In some implementations, the EV fast chargers 102 are public use level 3 chargers that are capable of charging an EV battery to about 80% capacity in about 30 minutes. In some implementations, one or more EV fast chargers 102 can be located indoors in a parking garage, or adjacent to an outdoor parking space, or at a designated EV charging station, e.g., the EV charging station 100, which is analogous to a gas station for fuel-powered vehicles. Each one of the EV fast chargers 102 shown in FIG. 1 supports three charging cables 104. Internal components of the EV fast chargers 102 can include transformer modules 106 that can step down the voltage of the high power supply that powers the EV fast charger 102 to the voltage of the load, e.g., an EV battery.

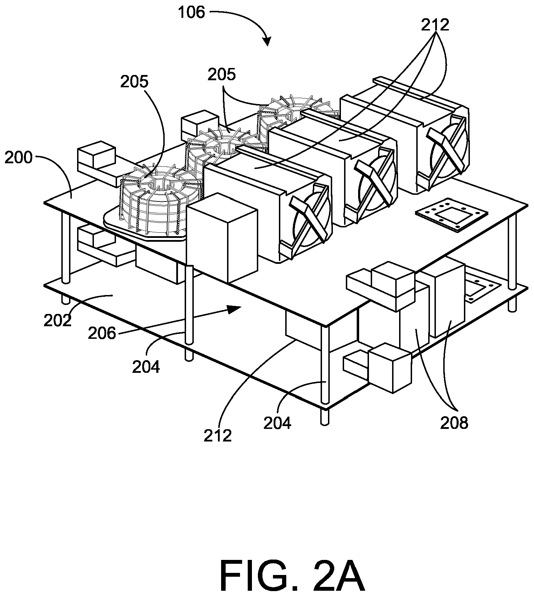

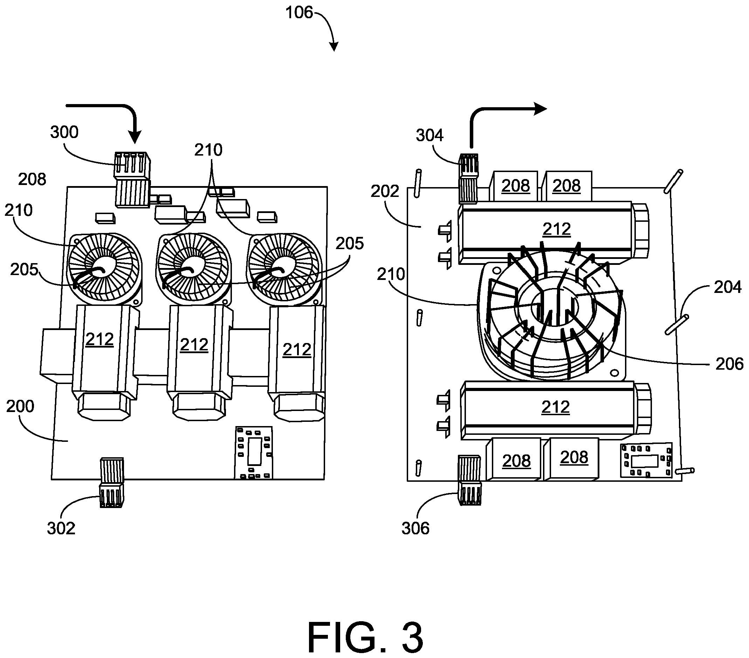

FIG. 2A is a pictorial perspective view of a transformer module 106 within the EV fast charger 102, according to some implementations of the present disclosure. In some implementations, the transformer module 106 can be in the form of a double-decker printed circuit board (PCB) that includes an upper circuit board 200, e.g., an upper PCB, and a lower circuit board 202, e.g., a lower PCB. The upper circuit board 200 can be attached to the lower circuit board 202 by support posts 204. In some implementations, the upper circuit board 200 can include one or more inductors 205 (three shown), among other components. In some implementations, the lower circuit board 202 can include a single high power telescope transformer 206 (indicated in Fig. 2A and shown in Fig. 3). In some implementations, one or more microprocessors 208 within the transformer module 106 can be used to control power delivery to the inductors 205 and the high-power telescope transformer 206. The inductors 205 can be mounted to the upper circuit board 200 using mounting plates 210, adjacent to heat sinks 212 (three shown). In some implementations, the high power telescope transformer 206 can be mounted to one or more heat sinks 212 (two shown) and electrically connected to the lower circuit board 202. In some implementations, mounting plates 210 can serve to dissipate heat and/or to conduct heat to the heat sinks 212.

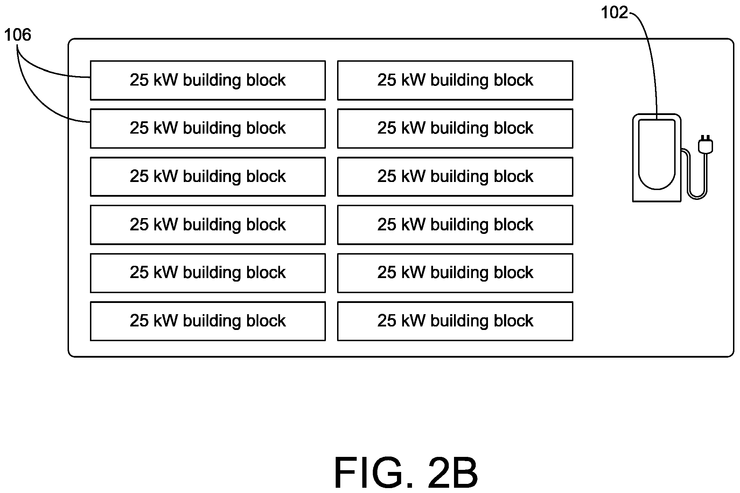

FIG. 2B is a block diagram of the EV fast charger 102, according to some implementations of the present disclosure. In some implementations, multiple transformer modules 106 can be used as building blocks that, when combined, can provide a desired total power delivery level of the EV fast charger 102. In some implementations, for example, each transformer module 106 can be a 25 kW silicon carbide (SiC) based DC fast charger. When 12 such transformer modules 106 are used together, e.g., coupled in parallel, they can provide a total power level of 300 kW of DC power for the EV fast charger 102. The transformer modules 106 can operate within a frequency range of about 225 kHz to about 275 kHz.

FIG. 3 shows further details of the transformer module 106, according to some implementations of the present disclosure. In FIG. 3, the upper circuit board 200 and the lower circuit board 202 are shown laid out side-by-side. The left side of FIG. 3 shows a top plan view of the upper circuit board 200 within the transformer module 106, to which the inductors 205 are mounted in the example shown. The right side of FIG. 3 shows a top plan view of the lower circuit board 202 within the transformer module 106 to which the telescope transformer 206 is mounted.

One high-power telescope transformer 206 and corresponding microprocessors 208 (four shown) are shown as components of the lower circuit board 202 of the transformer module 106. In some implementations, a different number of high-power transformers 206 can be incorporated into the transformer module 106. If the operating current supplied to the high-power telescope transformers 206 is too high, the magnetic material within the core(s) of the high-power telescope transformer 206 can saturate and cause the EV fast charger 102 to malfunction. The microprocessors 208 can be implemented as microcontrollers that control semiconductor switches to limit the operating current and result in a desired power delivered to the telescoped transformer 206. This ensures safe operation of the high-power telescope transformer 206. The high-power telescope transformer 206 can be coupled to the lower circuit board 202, adjacent to heat sinks 212. In some implementations, each high-power telescope transformer 206 has a substantially circular footprint and occupies a surface area of about 100 cm$^2$ on the lower circuit board 200.

In some implementations, the transformer module 106 is a power integrated module, in which the upper circuit board 200 functions as an AC/DC power converter and the lower circuit board 202 functions as a DC/DC power converter. The upper circuit board 200 includes an AC input port 300 and a DC output port 302. In some implementations, the upper circuit board 200 can receive, at the AC input port 300, an AC input of, for example, 480 V and provide a DC output voltage of 800 V at the DC output port 302.

In some implementations, the lower circuit board 202 is a DC/DC power converter having a DC input port 304 and a DC output port 306. The lower circuit board 202 can receive as input, 800 V DC from the upper circuit board 200 at the DC input port 304. The lower circuit board 202 can then provide a range of DC output voltages between about 150 V and 1000 V at the DC output port 306. While standard EV batteries are rated at 400 V, some newer models are being developed with a capacity of 800 V. The transformer module 106 therefore can provide a range of voltages to accommodate different battery designs.

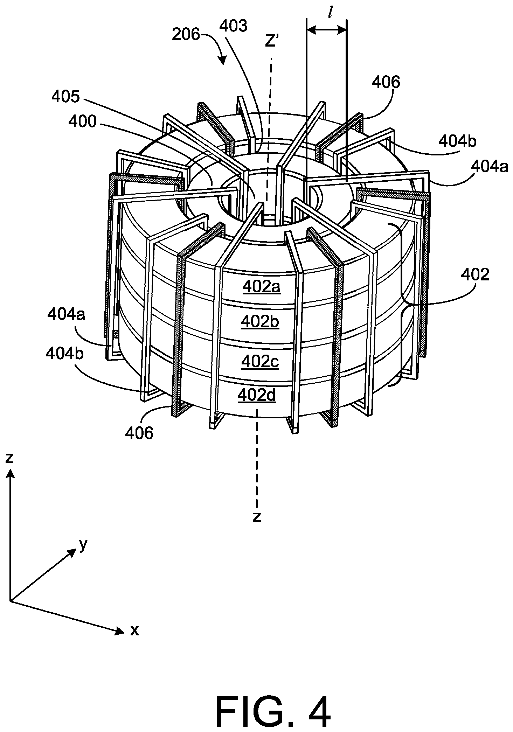

FIG. 4 is a perspective view of a high-power telescope transformer 206, according to some implementations of the present disclosure. In some implementations, the high-power telescope transformer 206 has a toroidal structure that includes an inductance core 400 telescoped within a transformer core 402. The inductance core 400 and the transformer core 402 can be formed from ferrite materials for high frequency operation. In some implementations, the transformer core 402 can include, for example, a nickel-zinc (NiZn) or manganese-zinc (MnZn) solid ferrite core. The inductance core 400 can be a distributed gap core that has less purity, and is magnetically weaker, than the transformer core 402. The inductance core 400 is an inner toroidal magnetic core; the transformer core 402 is an outer toroidal magnetic core. The inductance core 400 and the transformer core 402 are separated by a gap 403. In some implementations, the transformer core 402 can be in the form of a stack of multiple toroidal outer magnetic cores (four shown - 402a, 402b, 402c, 402d), wherein the outer toroidal magnetic core 402d is a base outer toroidal magnetic core and outer toroidal magnetic cores 402a, 402b, and 402c are stacked on top of the base outer toroidal magnetic core 402d. In some implementations, the inductance core 400 can also be formed from a base toroidal inductance core and multiple segments that are stacked on top of the base toroidal inductance core, similarly to the stacked elements of the transformer core 402.

The inductance core 400 and the transformer core 402 form concentric circular cylinders having a central opening 405 co-axial with a central longitudinal axis Z-Z'. The central longitudinal axis Z-Z' extends through the central opening 405. Empty volume inside the toroidal structure of the high-power telescope transformer 206, e.g., within the central opening 405, is used for a stray/resonant inductance, resulting in less volume being occupied by the magnetic components. Using the telescoped configuration, the volume of the high-power telescope transformer 206 can be minimized, to a volume of about 0.8 liter. In some implementations, an outer radius of the transformer core 402 can be about 50 mm, corresponding to a diameter of about 10 cm. A corresponding power-to-volume ratio can be in a range of about 10 kW/liter to about 20 kW/liter.

The high-power telescope transformer 206 further includes a primary set of windings 404 and a secondary set of windings 406. The primary set of windings 404 includes some long windings 404a that wrap around both the inner circular cylinder forming the inductance core 400 and the outer circular cylinder forming the transformer core 402, and pass through the central opening 405. The primary set of windings 404 further includes some short windings 404b that wrap around only the transformer core 402 and not around the inductance core 400. In some implementations, it may be sufficient for some, but not all, of the turns of the primary set of windings 404, e.g., the windings 404a to wrap around both magnetic cores, as shown in FIG. 4. For example, in FIG. 4, the number of long windings 404a is approximately equal to the number of short windings 404b, which is approximately equal to the number of turns of the secondary set of windings 406. In some implementations, the primary set of windings 404 can have a different ratio of the number of long windings 404a that wrap around both magnetic cores to the number of short windings 404b that wrap around one magnetic core, than are shown in the example. The ratio will affect both the inductance of the high-power telescope transformer 206 and the length of wire used for the primary set of windings 404, which affects the power loss. In some implementations, the total number of turns of the primary set of windings 404, including both the long windings 404a and the short windings 404b, can be about twice the number of turns of the secondary set of windings 406, as in the example shown in FIG. 4. Consequently, in such implementations, the length of wire used for the primary set of windings is greater than twice the length of wire used for the secondary set of winding, due to the different lengths of the short windings 404b and the long windings 404a. In some implementations, the number of turns of the long windings 404b can be different from the number of turns of the short windings 404b. In general, there may be any number of long windings 404a, any number of short windings 404b, and any number of turns in the secondary set of windings 406, without limitation. Further, the windings can be wound in any sequence, not limited to the example sequence shown in FIG. 4.

The geometry of the circular cylinders, e.g., the radius of each magnetic core and the gap 403 between the inductance core 400 and the transformer core 402 will also determine the length of wire needed for the primary set of windings 404 and the secondary set of windings 406. Thus, the particular telescoped geometry also affects the resistance loss and therefore the efficiency of the EV fast charger 102.

The secondary set of windings 406 wraps around the outer circular cylinder forming the transformer core 402 and passes through the gap 403 as shown. In some implementations, the secondary set of windings 406 could wrap around the inner circular cylinder forming the inductance core 400 and could pass through the central opening 405, but not around both magnetic cores. In the example shown in FIG. 4, the secondary set of windings 406 is distributed evenly among the primary set of windings 404. However, such a distribution, or ordering, of the windings is arbitrary. For example, the secondary set of windings 406 could all be on one side of the toroidal structure of the high-power telescope transformer 206, while the primary set of windings 404 could all be on an opposite side of the toroidal structure. Any configuration can be used, as long as the primary set of windings and the secondary set of windings are not electrically or physically connected to one another. Coupling between the primary set of windings 404 and the secondary set of windings 406 occurs through magnetic induction of the transformer core.

In some implementations, the primary set of windings 404 and/or the secondary set of windings 406 can be copper windings. In some implementations, the inner radius of the transformer core 402 can have a dimension that will allow the inductance core 400 to fit inside the transformer core 402 with a sufficient gap 403 to accommodate the windings.

Each individual turn of the primary set of long windings 404a is longer than a turn of the primary set of short windings 404b and a turn of the secondary set of windings 406 by approximately a length *2l*, where *l* is the radial thickness of the inductance core 400. Because only some of the primary set of windings 404, e.g., the long windings 404a, wrap around both magnetic cores, and because of its compact configuration, the high-power telescope transformer 206 results in less wire needed for the windings than might be needed with two discrete components as shown in FIG. 3. Less wire results in less resistive loss and therefore a more efficient transformer.

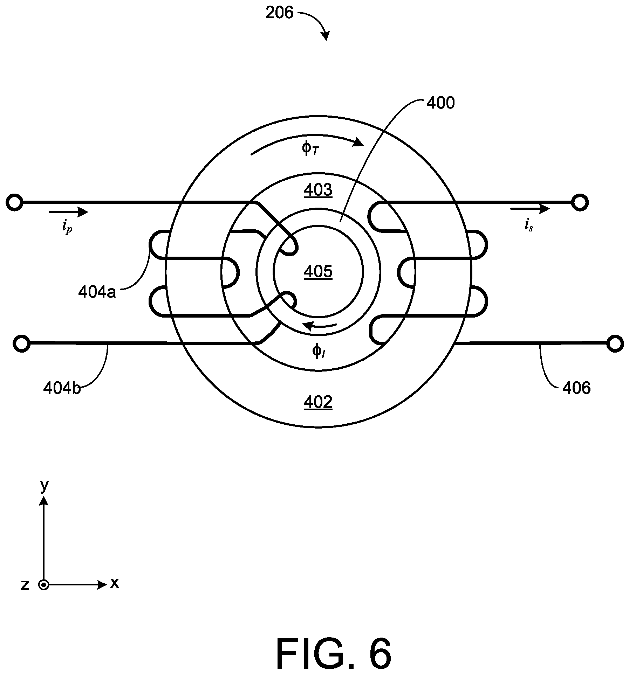

Although the primary set of windings 404 and the secondary set of windings 406 are both shown as having rectangular profiles, in some implementations, the winding profiles can have another shape. For example, winding profiles can be circular. That is, individual windings 404a, 404b, and /or 406 can have rounded edges, and turns of the windings need not be rectangular or have corners at the top and bottom of each turn as shown in the example in FIG. 4. Instead, the turns of the windings can be curved, for example, as shown in FIG. 6,

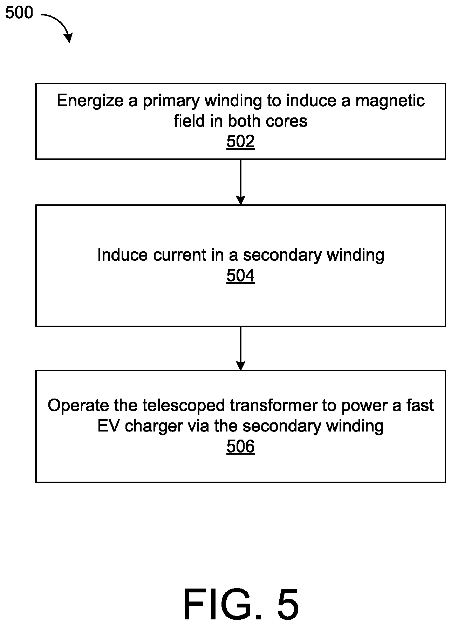

FIG. 5 is a flow chart illustrating a method 500 for operating a telescoped transformer, e.g., the high-power telescope transformer 206, in accordance with some implementations of the present disclosure as described herein with reference to FIGs. 1-4 and FIGs. 6-8. Operations 502-506 of the method 500 can be carried out to improve efficiency of a high power fast EV charger, e.g., the EV charger 102, according to some implementations Operations of the method 500 can be performed in a different order, or not performed, depending on specific applications. It is noted that the method 500 may not be the only way to operate the high-power telescope transformer 206. Accordingly, it is understood that additional processes can be provided before, during, or after method 500, and that some of these additional processes may be briefly described herein.

At 502, the method 500 includes energizing the primary set of windings 404, in accordance with some implementations of the present disclosure as shown and described with reference to FIG. 6. Because the primary set of windings 404 wraps around both of the magnetic cores, applying a voltage to the primary set of windings 404 will induce a magnetic field in both the inductance core 400 and the transformer core 402.

FIG. 6 is a schematic diagram of the high-power telescope transformer 206, according to some implementations of the present disclosure. FIG. 6 shows the inductance core 400 surrounded by the transformer core 402. In some implementations, as shown in FIG. 4, one or both of the inductance core 400 and the transformer core 402 can be in the form of stacked elements (e.g., 402a, 402b, 402c, and 402d). For the purpose of illustration, FIG. 6 appears to show only one such stacked element. However, items 400 and 402 in FIG. 6 are intended to represent any solid or stacked configuration of telescoped magnetic cores. FIG. 6 also shows the secondary set of windings 406 wrapped around the transformer core 402 and a portion of the primary set of windings, 404a, wrapped around both the inductance core 400 and the transformer core 402. In some implementations, as shown in FIG. 6, some of the turns of the primary set of windings 404, e.g., the long windings 404a can wrap around both magnetic cores while one or more of the turns of the primary set of windings 404, e.g., the short windings 404b, can wrap around only the transformer core 402. In some implementations, all of the turns of the primary set of windings 404 may be windings 404a that wrap around both magnetic cores.

In operation, when a time-varying (alternating) current $i_p$ is applied to the primary set of windings 404, including both long windings 404a and short windings 404b, a clockwise magnetic flux $\varphi_T$ is induced in the transformer core 402, according to the relationship

$$\phi_T = i_p \frac{n_p \, \mu_0 \, \mu_r \, A_T}{l_T}$$

The magnetic flux $\varphi_T$ can then induce a current, $i_s$, in the

secondary set of windings 406.

When a time-varying (alternating) current, $i_s$, is applied to the secondary set of windings 406, a clockwise magnetic flux $\varphi_T$ is induced in the transformer core 402 according to the relationship

$$\phi_T = -i_s \frac{n_s \, \mu_0 \, \mu_r \, A_T}{l_T}.$$

The total magnetic flux induced in the transformer core 402 is then given by the sum of the two contributions:

$$\phi_T = (i_p n_p - i_s n_s) \frac{\mu_0 \, \mu_r \, A_T}{l_T}$$

The current $i_p$ applied to the primary set of windings 404 also induces a clockwise magnetic flux $\varphi_I$ in the inductance core 400 according to the relationship

$$\phi_I = i_p \frac{n_p \, \mu_0 \, \mu_r \, A_I}{l_I}.$$

The current is, does not contribute to the magnetic flux $\varphi I$ in the inductance core 400. However, energizing the secondary set of windings 406 can have an indirect effect on the inductance core 400 by inducing a current in the primary set of windings 404.

At 504, the method 500 includes inducing a current in the secondary set of windings 406, in accordance with some implementations of the present disclosure as shown and described with reference to FIG. 6. Because the secondary set of windings 406 wraps around one of the magnetic cores, the magnetic flux produced by the current ip in whichever core is coupled to the secondary set of windings 406 will induce a current therein.

At 506, the method 500 includes operating the high-power telescope transformer 206 operating the telescoped transformer to supply power to an EV charger, e.g., the EV charger 102, via the secondary set of windings 406. The high-power telescope transformer 206 operates within the DC-DC converter with less power loss than a conventional transformer and inductor combination built from discrete components. In some implementations, the electrical behavior of the high-power telescope transformer 206 can be substantially the same as a non-telescoped transformer with an additional stray/resonant inductance. However, an advantage of the high-power telescope transformer 206 is that the total length of the copper windings is shorter than the length of the windings of a comparable non-telescoped transformer. For example, the length of copper windings in the high-power telescope transformer 206 can be about 10 meters compared to about 13 meters for a non-telescoped transformer. Fewer windings lower the resistive "I2R" power loss in the copper wires. As the current carried in the windings increases, the difference in power loss between a traditional transformer and the high-power telescope transformer 206 becomes significant. Therefore, for high power applications, reducing the length of the copper windings is a preferred way to address the dominant loss source, e.g., losses in the windings, as opposed to power loss in the magnetic core.

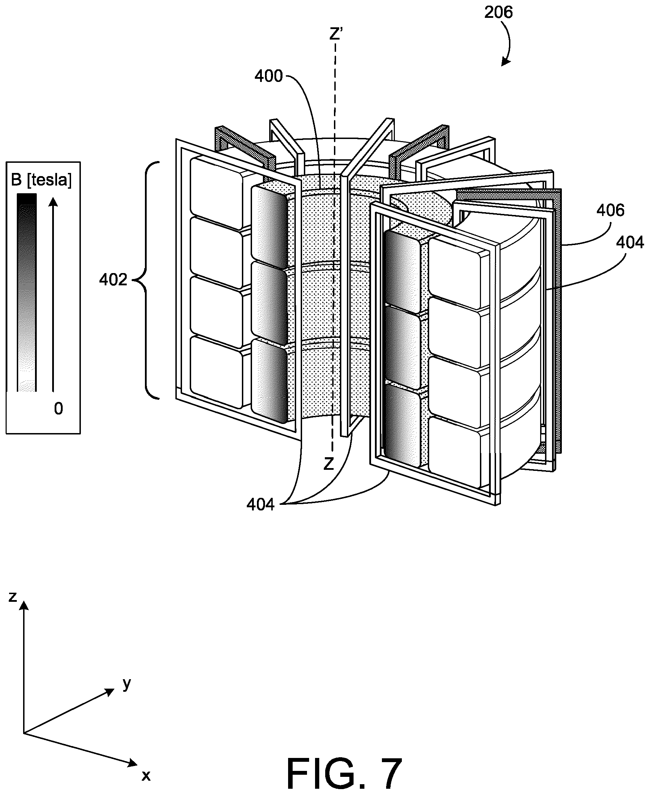

FIG. 7 is a cross-sectional view of the high-power telescope transformer 206 shown in FIG. 4 during a short circuit simulation, according to some implementations of the present disclosure. FIG. 7 indicates different magnetic field strengths B, in units of Tesla, induced within the inductance core 400 in response to a short circuit excitation. In the short circuit simulation shown in FIG. 7, $i_p n_p = i_s n_s$, where $n_p$ is the number of turns of the primary set of windings 404; $n_s$ is the number of turns of the secondary set of windings 406; $i_p$ is the current in the primary set of windings 404; and $i_s$ is the current in the secondary set of windings 406. A short circuit flux is induced in the inner inductance core 400. The magnetic field strength produced within the inductance core 400 is largest near the center of the inductance core 400 and decreases in strength with radial distance away from the central longitudinal axis Z-Z'. In some implementations, the maximum strength of the magnetic field induced during the short circuit simulation can be between about 0.3 Tesla and about 0.4 Tesla.

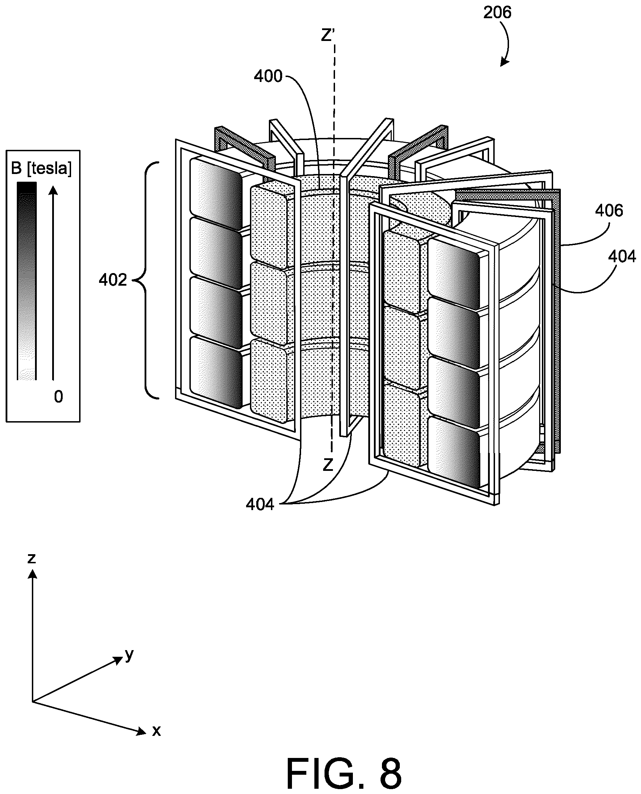

FIG. 8 is a cross-sectional view of the high-power telescope transformer 206 shown in FIG. 4 during an open circuit simulation, according to some implementations of the present disclosure. FIG. 8 indicates different magnetic field strengths B, in units of Tesla, induced within the transformer core 402, in response to an open circuit excitation. In the simulation shown in FIG. 8, the current in the secondary set of windings 406, $i_s = 0$. An open circuit flux is induced in the outer transformer core 402 by a current $i_p$ in the primary set of windings 404. The magnetic field strength within each of the stacked outer magnetic cores is largest closest to the center of the transformer core 402 and decreases in strength with radial distance away from the central longitudinal axis Z-Z'. In some implementations, the strength of the magnetic field induced in the outer transformer core 402 during the open circuit simulation can be about 0.3 Tesla.

As described above, various implementations of a high-power telescope transformer 206 can improve efficiency of operating the EV chargers 102. In some implementations, reducing the volume of the magnetic cores by using a telescoped toroidal structure reduces core losses. In some implementations, reducing the length of copper wire needed for the transformer windings reduces resistive losses.

It will be understood that, in the foregoing description, when an element, such as a layer, a region, or a substrate, is referred to as being on, connected to, electrically connected to, coupled to, or electrically coupled to another element, it may be directly on, connected or coupled to the other element, or one or more intervening elements may be present. In contrast, when an element is referred to as being directly on, directly connected to or directly coupled to another element or layer, there are no intervening elements or layers present. Although the terms directly on, directly connected to, or directly coupled to may not be used throughout the detailed description, elements that are shown as being directly on, directly connected or directly coupled can be referred to as such. The claims of the application may be amended to recite exemplary relationships described in the specification or shown in the figures.

As used in this specification, a singular form may, unless definitely indicating a particular case in terms of the context, include a plural form. Spatially relative terms (e.g., over, above, upper, under, beneath, below, lower, top, bottom, and so forth) are intended to encompass different orientations of the device in use or operation in addition to the orientation depicted in the figures. In some implementations, the relative terms above and below can, respectively, include vertically above and vertically below. In some implementations, the term adjacent can include laterally adjacent to or horizontally adjacent to.

Some implementations may be implemented using various semiconductor processing and/or packaging techniques. Some implementations may be implemented using various types of semiconductor device processing techniques associated with semiconductor substrates including, but not limited to, for example, silicon (Si), silicon carbide (SiC), gallium arsenide (GaAs), gallium nitride (GaN), and/or so forth.

While certain features of the described implementations have been illustrated as described herein, many modifications, substitutions, changes, and equivalents will now occur to those skilled in the art. For instance, features illustrated with respect to one implementation can, where appropriate, also be included in other implementations. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

**Claims**

1. An apparatus, comprising:

   a base toroidal outer core having an opening and a longitudinal axis through the opening;
   a base toroidal inner core disposed within the opening and coaxial with the base toroidal outer core;
   a first set of conductive windings wrapped around the base toroidal outer core and the base toroidal inner core to pass through the opening; and
   a second set of conductive windings wrapped around the base toroidal outer core so as to pass through the opening.

2. The apparatus of claim 1, further comprising one or more additional toroidal outer cores stacked on the base toroidal outer core to form an outer circular cylinder having an opening, wherein the first and second sets of conductive windings wrap around the outer circular cylinder and pass through the opening.

3. The apparatus of claim 2, further comprising an additional toroidal inner core stacked on the base toroidal inner core to form an inner circular cylinder having an opening, wherein the first set of conductive windings wrap around the inner circular cylinder and pass through the opening.

4. The apparatus of claim 3, wherein:

   the outer circular cylinder is a transformer core, and the inner circular cylinder is an inductance core, or
   the second set of conductive windings are shorter than the first set of conductive windings by a length equal to about twice a radial thickness of the base toroidal inner core.

5. The apparatus of claim 3, wherein the base toroidal outer core and the base toroidal inner core include ferrite materials.

6. The apparatus of claim 5, wherein the ferrite materials include a zinc alloy.

7. A method, comprising:

   energizing a primary winding of a telescoped transformer to induce a magnetic field in an outer transformer core and an inner inductor core;
   inducing current in a secondary winding of a telescoped transformer via the magnetic field in the outer transformer core; and
   operating the telescoped transformer to supply power to an electric vehicle charger via the secondary winding.

8. The method of claim 7, wherein

operating the telescoped transformer includes energizing long primary windings that wrap around both the outer transformer core and the inner inductor core, or
operating the telescoped transformer includes energizing short primary windings that wrap around the outer transformer core, or
while operating the telescoped transformer, a power-to-volume ratio exceeds 10 kW/liter.

9. An electric vehicle charging station, comprising:

a power module including a printed circuit board;
a telescoped transformer coupled to the printed circuit board, the telescoped transformer having an inner core inside an outer core;
a microcontroller mounted to the printed circuit board and coupled to the telescoped transformer, the microcontroller configured to control operation of the telescoped transformer; and
a cable configured to couple the power module to an electric vehicle.

10. The electric vehicle charging station of claim 9, further comprising additional telescoped transformers coupled in parallel to increase a charging capacity of the electric vehicle charging station.

11. The electric vehicle charging station of claim 9, further comprising additional power modules coupled in parallel to increase a charging capacity of the electric vehicle charging station.

12. The electric vehicle charging station of claim 9, wherein the power module includes silicon carbide (SiC).

13. The electric vehicle charging station of claim 9, wherein the telescoped transformer includes a stack of multiple toroidal outer magnetic cores.

14. The electric vehicle charging station of claim 9, wherein the telescoped transformer has a substantially circular footprint on the printed circuit board.

15. The electric vehicle charging station of claim 9, wherein

the electric vehicle charging station supplies a total power of about 300 kW, or
the power module delivers a power of about 25 kW.
the electric vehicle charging station is configured to operate at 240 V.

FIG. 1

FIG. 2A

EP 4 621 810 A1

FIG. 2B

FIG. 3

FIG. 4

500

Energize a primary winding to induce a magnetic
field in both cores
502

Induce current in a secondary winding
504

Operate the telescoped transformer to power a fast
EV charger via the secondary winding
506

# FIG. 5

FIG. 6

FIG. 7

FIG. 8

Europäisches
Patentamt

European
Patent Office

Office européen
des brevets

# EUROPEAN SEARCH REPORT

**Application Number**

EP 24 18 1582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 328 362 A (TRAFTOR TECH (SHENZHEN) CO LTD) 11 January 2017 (2017-01-11) | 1-6 | INV. H01F3/10 |
| Y | * 4-20; figures 1-5 * | 7-15 | H01F19/08 H01F27/28 H01F27/40 |
| X | CH 295 500 A (LICENTIA GMBH [DE]) 31 December 1953 (1953-12-31) | 1-6 | B60L53/30 H01F30/16 |
| Y | * p. 2, l. 39-86; figure 2 * | 7-15 | H01F37/00 |
| X | WO 91/10285 A1 (INTEGRATED POWER COMPONENTS IN [US]) 11 July 1991 (1991-07-11) * p. 4, l. 30 - p. 5, l. 30; figures 1, 2 * | 1-6 | ADD. H01F27/255 |
| A | EP 3 921 855 B1 (EATON INTELLIGENT POWER LTD [IE]) 26 July 2023 (2023-07-26) * 2-4 and 13 * | 2,3,13 | |
| A | CN 108 962 546 A (SHANGHAI YIYU ELECTRONIC TECH CO LTD) 7 December 2018 (2018-12-07) * 47-49 * | 2,3,13 | TECHNICAL FIELDS SEARCHED (IPC) |
| Y | US 2021/028641 A1 (ILIC MILAN [US] ET AL) 28 January 2021 (2021-01-28) * 28-78 and 101; figures 2A, 2B, 5, 11A-11D * | 7-15 | H01F B60L H02M H02J |
| Y | EP 0 121 839 A1 (WESTINGHOUSE ELECTRIC CORP [US]) 17 October 1984 (1984-10-17) * col. 3, l. 20-col. 4, l. 37 and col. 6, l. 1 - col. 8, l. 16; figures 1, 2 * | 7-15 | |

-/--

The present search report has been drawn up for all claims

| Place of search | Date of completion of the search | Examiner |
|---|---|---|
| Munich | 10 January 2025 | Brächer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 18 1582

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 3 454 916 A (HOOVER WILLIAM GEORGE) 8 July 1969 (1969-07-08) * col. 1,. l. 22 - col. 3, l. 24; figures 1, 2 * ----- | 7-15 | |
| Y | HAGHBIN SAEID: "A 50 kW Compact and Efficient Charger Prototype Utilizing SiC Power Modules and Nanocrystalline Magnetic Materials", 2018 20TH EUROPEAN CONFERENCE ON POWER ELECTRONICS AND APPLICATIONS (EPE'18 ECCE EUROPE), EPE ASSOCIATION, 17 September 2018 (2018-09-17), XP033433138, [retrieved on 2018-10-30] * the whole document * ----- | 7-15 | |

TECHNICAL FIELDS
SEARCHED      (IPC)

The present search report has been drawn up for all claims

| Place of search | Date of completion of the search | Examiner |
|---|---|---|
| Munich | 10 January 2025 | Brächer, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

Europäisches
Patentamt

European
Patent Office

Office européen
des brevets

**Application Number**

EP 24 18 1582

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

The Search Division considers that the present European patent application does not comply with the requirements of unity of invention and relates to several inventions or groups of inventions, namely:

1. claims: 1-6

   An apparatus consisting of a telescoped transformer with an integrated inductor

   - - -

2. claims: 7-15

   An electric vehicle charging station comprising a telescoped transformer and a corresponding charging method.

   - - -

## ANNEX TO THE EUROPEAN SEARCH REPORT
## ON EUROPEAN PATENT APPLICATION NO.

EP 24 18 1582

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | | Publication date | Patent family member(s) | | Publication date |
|---|---|---|---|---|---|
| CN 106328362 | A | 11-01-2017 | NONE | | |
| CH 295500 | A | 31-12-1953 | NONE | | |
| WO 9110285 | A1 | 11-07-1991 | EP | 0509059 A1 | 21-10-1992 |
| | | | US | 5083101 A | 21-01-1992 |
| | | | WO | 9110285 A1 | 11-07-1991 |
| EP 3921855 | B1 | 26-07-2023 | EP | 3921855 A1 | 15-12-2021 |
| | | | GB | 2595409 A | 24-11-2021 |
| | | | GB | 2612239 A | 26-04-2023 |
| | | | US | 2020258671 A1 | 13-08-2020 |
| | | | WO | 2020160849 A1 | 13-08-2020 |
| CN 108962546 | A | 07-12-2018 | NONE | | |
| US 2021028641 | A1 | 28-01-2021 | CN | 112290609 A | 29-01-2021 |
| | | | EP | 3771068 A1 | 27-01-2021 |
| | | | JP | 2021023096 A | 18-02-2021 |
| | | | US | 2021028641 A1 | 28-01-2021 |
| EP 0121839 | A1 | 17-10-1984 | AU | 572496 B2 | 12-05-1988 |
| | | | BR | 8401546 A | 13-11-1984 |
| | | | CA | 1245313 A | 22-11-1988 |
| | | | EP | 0121839 A1 | 17-10-1984 |
| | | | ES | 8605123 A1 | 01-10-1985 |
| | | | GR | 81901 B | 12-12-1984 |
| | | | IN | 162155 B | 09-04-1988 |
| | | | JP | S59197106 A | 08-11-1984 |
| | | | KR | 840008516 A | 15-12-1984 |
| | | | MX | 154752 A | 08-12-1987 |
| | | | NO | 163349 B | 29-01-1990 |
| | | | NZ | 207566 A | 30-06-1988 |
| | | | PH | 21055 A | 03-07-1987 |
| | | | US | 4520335 A | 28-05-1985 |
| | | | ZA | 842115 B | 31-10-1984 |
| US 3454916 | A | 08-07-1969 | DE | 1801722 A1 | 08-05-1969 |
| | | | US | 3454916 A | 08-07-1969 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61384624